# EUROPEAN PATENT SPECIFICATION

(11) **EP 2 437 679 B1**
(45) Date of publication and mention of the grant of the patent: **07.02.2024**
(21) Application number: 10782844.4
(22) Date of filing: 02.06.2010
(51) Int. Cl.: A61C 8/00, A61C 13/01, A61C 13/00

(54) **METHOD FOR MAUNUFACTURING A SUPPORTING STRUCTURE FOR A PROSTHESIS**
VERFAHREN ZUR HERSTELLUNG EINER STÜTZSTRUKTUR FÜR EINE PROTHESE
MÉTHODE DE FABRICATION D'UNE STRUCTURE DE SUPPORT POUR PROTHÈSE

(30) Priority: 02.06.2009 BE 200900336
(43) Date of publication of application: 11.04.2012
(73) Proprietor: LayerWise N.V., 3001 Heverlee (BE)
(72) Inventor: MERCELIS, Peter, 2460 Kasterlee (BE)
(74) Representative: Callewaert, Koen
(86) International application number: PCT/BE2010/000041
(87) International publication number: WO 2010/139031

(56) References cited:
- WO-A-2006/079188
- BE-A3- 1 011 205
- US-A- 3 672 058
- US-A- 6 056 547

## Description

The invention concerns a method for manufacturing a supporting structure for a dental prosthesis, whereby this supporting structure comprises means to be fixed to at least one implant and/or at least one tooth which is set into a person's jawbone. This supporting structure has a nominal surface with a surface texture which is at least partly formed of retention elements.

Such retention elements make sure that synthetic material or porcelain can be connected to the supporting structure with a very large adhesive power. This is particularly important when fixing for example false teeth to the supporting structure.

Many of the existing dental prostheses are formed of a metal or ceramic supporting structure and an upper structure. Such an upper structure is formed for example of synthetic teeth which are glued onto the supporting structure or of a layer of porcelain which is burnt onto the supporting structure. In order to obtain a good and reliable connection between the supporting structure and the upper structure, a good bond between both is required. Hence, it is indicated to create a contact surface between the supporting structure and the upper structure which is as large as possible.

According to the present state of the art, the size of the contact surface is enlarged by increasing the surface roughness, for example by sandblasting the supporting structure or by treating it with plasma jets. In some cases, a porous top coat is provided as well on the supporting structure.

If the supporting structure is made by means of a lost wax technique, little granules will be provided for example on the wax model, as a result of which the final supporting structure will have granular retention elements.

In document BE 1011205 a supporting structure for a dental prosthesis having teeth is digitally designed and an inward offset is given to the surface thereof as a function of the porcelain or acrylate finish to be used. In this way, a nominal surface for the supporting structure is defined. This computer model is then modified by removing the part of this model that constitutes the teeth and by replacing this part by bars with small grains that form retention elements for the porcelain or acrylate finish.

WO 2006/079188 and US 2008/0241798 describe structures manufactured by a rapid prototyping technique with a rough surface.

However, the invention aims to provide a method for manufacturing a supporting structure for a dental prosthesis which makes sure that a stronger bond is obtained between the supporting structure and the upper structure than is the case with the known supporting structures according to the present state of the art.

To this aim, said retention elements comprise protrusions and/or recesses in relation to the nominal surface of the supporting structure each having an undercut.

Practically, said retention elements extend in relation to said surface over a height according to the normal direction on the nominal surface which is smaller than one fifth, and preferably smaller than one tenth of the average diameter of the supporting structure

In an advantageous manner, the supporting structure is made by means of a selective laser sintering and melting method, in particular Selective Laser Powder Processing.

The invention concerns a method for manufacturing a supporting structure for a dental prosthesis, whereby this supporting structure is digitally generated, and thus a nominal surface for the supporting structure is determined having means for being fixed to at least one implant and/or at least one tooth which is set into a person's jawbone. This method is characterised in that a surface texture which is at least partly formed of retention elements is digitally provided on said nominal surface. Digital information is thereby generated which defines the supporting structure provided with the above-mentioned surface texture. On the basis of this digital information, the supporting structure is manufactured by means of a rapid prototyping technique.

According to the method according to the invention, a surface texture is digitally provided on said nominal surface with retention elements formed of protrusions and/or recesses in relation to said nominal surface, whereby these retention elements each have an undercut.

In an interesting manner, a selective laser sintering and melting method is applied as said rapid prototyping technique, in particular a Selective Laser Powder Processing.

Other particularities and advantages of the invention will become clear from the following description of some specific embodiments of the method according to the invention. The present description is given as an example only and does not restrict the scope of the claimed protection in any way; the reference figures used hereafter refer to the accompanying drawings.
Figure 1 represents a few schematic left-hand side views of an implant-born dental prosthesis, whereby illustration (a) represents a lower jaw with said prosthesis, illustration (b) represents this lower jaw with implants and a supporting structure, and illustration (c) represents a vertical longitudinal section of the prosthesis.
Figure 2 is a schematic representation in perspective of a supporting structure provided with a surface structure.
Figure 3 is a schematic two-dimensional representation of a nominal surface and of this surface provided with a surface texture.
Figure 4 is a schematic two-dimensional representation of a retention element forming a protrusion in relation to the nominal surface of the supporting structure with an undercut.
Figure 5 is a schematic two-dimensional representation of another retention element forming a protrusion in relation to the nominal surface of the supporting structure with an undercut.
Figure 6 is a schematic two-dimensional representation of a retention element forming a recess in the nominal surface of the supporting structure with an undercut.
Figure 7 is a schematic two-dimensional representation of a retention element forming a protrusion in relation to the nominal surface of the supporting structure with an undercut.

In the different drawings, the same reference figures refer to identical or analogous elements.

The invention generally concerns a method for digitally designing and producing a supporting structure for a dental prosthesis, whereby this supporting structure is provided with a surface texture in order to enlarge the contact surface with an upper structure to be fixed on the supporting structure. This surface texture comprises retention elements each having an undercut. The surface texture is hereby digitally applied on a basic form for the supporting structure, whereby said supporting structure is subsequently manufactured by means of a rapid prototyping technique. This rapid prototyping technique preferably consists of a Selective Laser Powder Processing.

The supporting structure, which is either screwed down on implants which are present in a person's jaw or which is cemented to teeth which are still present in the jaw, is digitally designed by making use of CAD software. After the nominal surface of the supporting structure has been designed, a surface texture is applied on the nominal surface of the designed supporting structure by means of the same CAD software. This surface texture comprises among others retention elements each having an undercut.

In order to physically produce the final supporting structure including the surface texture, a Selective Laser Powder Processing is applied. The three-dimensional shape of the supporting structure is transformed in a series of two-dimensional layers which are successively put in a solid shape on top of one another. Thus, the three-dimensional shape of the digitally designed supporting structure with the surface texture is gradually generated.

Said Selective Laser Powder Processing is known as such to the professional and is described for example in greater detail in document WO 2006/079188.

By "nominal surface" is meant the surface of the supporting structure in this description, which has been designed on the basis of the characteristics of the dental prosthesis to be produced, without this surface having any surface structure or surface texture. Consequently, this nominal surface comprises means making it possible to cement the supporting structure on existing teeth or to fix it onto dental implants fixed in the jaw.

Alternatively, the nominal surface of the supporting structure can also be described as the apparent surface of said supporting structure which is visible according to a normal direction on the surface of said supporting structure.

"Surface texture" or "texture" refers to the form deviations of a surface in relation to said nominal surface. In particular, a surface texture is characterised in that it shows variations in height and characteristic dimensions which are an order or more smaller than the variations in height and characteristic dimensions of said nominal surface.

The term "undercut" refers to a geometric element which is not directly visible according to a normal direction on the nominal surface.

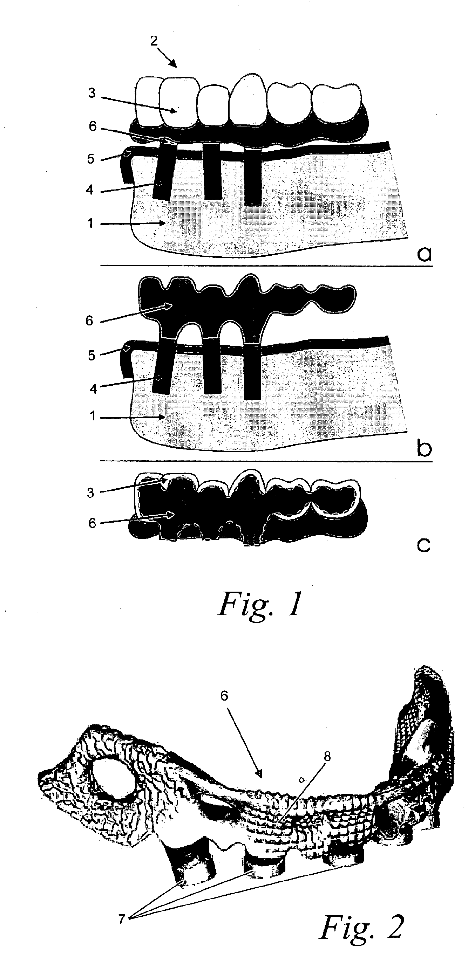

Figure 1a is a left-hand side view of a jaw 1 with a dental prosthesis 2 which is provided with false teeth 3. This prosthesis 1 is fixed to implants 4 extending through the gums 5 and which are anchored in the jaw 1.

Figure 1b represents the supporting structure 6 onto which the teeth 3 are fixed and with which the prosthesis 1 is fixed to the implants 4.

Figure 1c shows how the false teeth 3 have been formed by adhering a thin layer of synthetic material or porcelain onto the supporting structure.

An example of a supporting structure 6 made according to the method of the invention is represented in figure 2. This supporting structure 6 is provided with sockets 7 forming means for an almost perfect fit on the implants provided in the jaw. Further, said supporting structure has a surface texture 8 over part of its surface which makes sure that the contact surface with the false teeth to be fixed on the latter is considerably enlarged in relation to the nominal surface of the supporting structure.

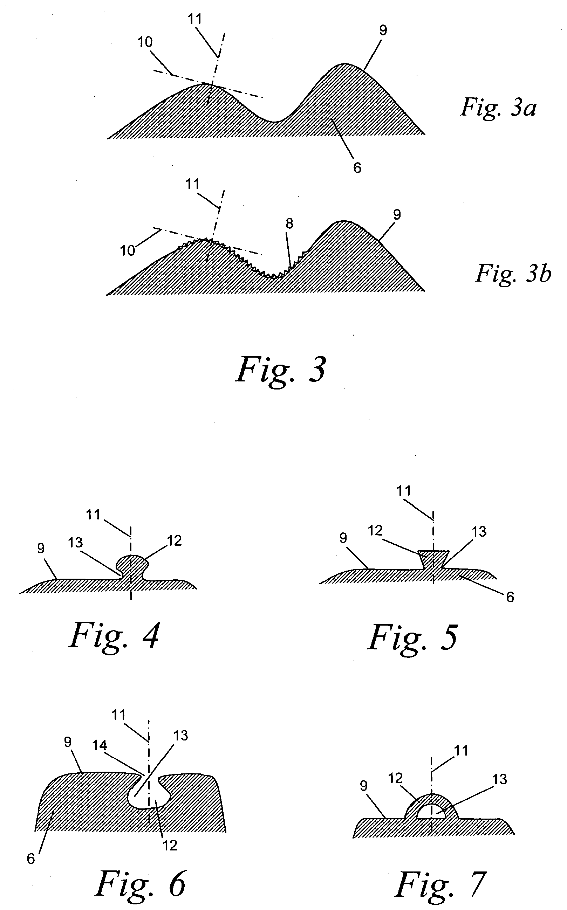

Figure 3a is a schematic two-dimensional representation of part of the nominal surface 9 of a supporting structure 6. To each point of this nominal surface corresponds a tangent line 10 with said surface 9 and a normal direction 11.

In figure 3b, a surface texture 8 is applied on a part of the nominal surface 9. This texture 8 is formed of pyramidal protrusions extending above the nominal surface 9.

In general, the surface texture 8 is formed of a regular or irregular repetition of a textured pattern of retention elements. A textured pattern thus comprises at least one retention element.

Figures 4 to 7 represent different possible embodiments of retention elements 12.

The retention element 12 from figure 4 is formed of a mushroom-shaped protrusion with a ring-shaped undercut 13, and thus it protrudes above the nominal surface 9. When looking at the retention element 12 according to the normal direction 11 on the nominal surface 9, said ring-shaped cut-out 13 is not visible.

Figure 5 represent a retention element 8 having the shape of a reverse truncate pyramid. This retention element protrudes in relation to the nominal surface 9 and also has an undercut 13 which is not visible according to the normal direction 11.

A retention element 12 which is formed of a recess in the nominal surface 9 is schematically represented in figure 6. Thus, this retention element 12 is countersunk in the nominal surface 9 whereby it forms a cavity in the latter with an access opening 14 whose diameter is smaller than the largest diameter of the cavity according to a plane parallel to the access opening. Thus, this retention element 12 also has an undercut 13.

Figure 7 shows a retention element 12 in the shape of a half ring having an undercut 13 which is formed of a semi cylinder.

The invention concerns a method for manufacturing a supporting structure 6 with a nominal surface 9 having a surface texture 8 which is at least partly formed of retention elements 12 which consist of protrusions and recesses in relation to the nominal surface 9 of the supporting structure or of a combination of these protrusions and recesses. In order to considerably improve the bond of an upper structure to the supporting structure 6, said retention elements 12 each have an undercut 13. This undercut may extend for example over the entire perimeter of the retention element 12 or over only part of the perimeter. In the retention element as represented in figure 7, the undercut 13 is situated inside the retention element 12.

In order to restrict the dimensions of the supporting structure 6 and nevertheless obtain a supporting structure that is sufficiently solid, said retention elements 12 extend over a height in relation to said nominal surface 9 according to a normal direction on the nominal surface which is smaller than one fifth, and preferably smaller than one tenth of the average diameter of the supporting structure 6.

Moreover, the minimal surface of the cross section of a retention element 12 at said undercut 13 according to a plane which is perpendicular to a normal 11 on the nominal surface 9 comprising the centre of the retention element amounts to 50% to 90% of the maximal cross section of the retention element 12 according to a plane which is perpendicular to said normal 11.

## Claims

1. Method for manufacturing a supporting structure (6) for a dental prosthesis, whereby this supporting structure (6) is digitally generated and a nominal surface (9) for the supporting structure (6) is thus determined having means (7) for being fixed to at least one implant and/or at least one tooth which is set into a person's jawbone, **characterised in that** a surface texture (8) which is at least partly formed of retention elements (12) is digitally provided on said nominal surface (9) with retentions (12) being formed of protrusions and/or recesses in relation to said nominal surface (9) each having an undercut (13) and **in that** digital information is generated which defines the supporting structure (6) provided with said surface texture (8), wherein said retention elements (12) are provided over at least 25% of said nominal surface (9) of the supporting structure (6), whereby the supporting structure (6) is subsequently manufactured on the basis of this digital information by means of a rapid prototyping technique.

2. Method according to claim 1, whereby a selective laser sintering and melting method is applied as said rapid prototyping technique, in particular a Selective Laser Powder Processing.

3. Method according to claim 1 or 2, whereby said retention elements (12) are provided over at least 50%, or at least 75%, and preferably over at least 90% of said nominal surface (9) of the supporting structure (6).

## Patentansprüche

1. Verfahren zum Herstellen einer Stützstruktur (6) für eine Zahnprothese, wobei diese Stützstruktur (6) digital erzeugt wird und somit eine Nennfläche (9) für die Stützstruktur (6) bestimmt wird, die Mittel (7) aufweist, um an mindestens einem Implantat und/oder mindestens einem Zahn befestigt zu werden, das/der in den Kiefer einer Person eingebracht wird, **dadurch gekennzeichnet, dass** eine Oberflächentextur (8), die mindestens teilweise aus Halteelementen (12) gebildet wird, auf der Nennfläche (9) digital bereitgestellt wird, wobei Halteelemente (12) aus Vorsprüngen und/oder Ausnehmungen in Bezug auf die Nennfläche (9) gebildet werden, wobei jedes eine Hinterschneidung (13) aufweist, und dadurch, dass digitale Informationen erzeugt werden, die die Stützstruktur (6) definieren, die mit der Oberflächentextur (8) bereitgestellt wird, wobei die Halteelemente (12) auf mindestens 25 % der Nennfläche (9) der Stützstruktur (6) bereitgestellt werden, wobei die Stützstruktur (6) anschließend, basierend auf diesen digitalen Informationen, mittels einer Rapid-Prototyping-Technik hergestellt wird.

2. Verfahren nach Anspruch 1, wobei ein selektives Lasersinter- und Schmelzverfahren, insbesondere eine selektive Laserpulververarbeitung, als die Rapid-Prototyping-Technik angewandt wird.

3. Verfahren nach Anspruch 1 oder 2, wobei die Halteelemente (12) auf mindestens 50 % oder mindestens 75 % und bevorzugt auf mindestens 90 % der Nennfläche (9) der Stützstruktur (6) bereitgestellt werden.

## Revendications

1. Procédé de fabrication d'une structure de support (6) pour une prothèse dentaire, selon lequel cette structure de support (6) est générée numériquement et une surface nominale (9) pour la structure de support (6) est ainsi déterminée comportant des moyens (7) pour être fixés à au moins un implant et/ou au moins une dent insérée dans l'os de la mâchoire d'une personne, **caractérisé en ce qu'**une texture de surface (8) formée au moins en partie d'éléments de rétention (12) est prévue numériquement sur ladite surface nominale (9) avec des rétentions (12) étant formées de saillies et/ou d'évidements par rapport à ladite surface nominale (9) ayant chacune une contre-dépouille (13), et **en ce que** des informations numériques sont générées qui définissent la structure de support (6) pourvue de ladite texture de surface (8), dans lequel lesdits éléments de rétention (12) sont prévus sur au moins 25 % de ladite surface nominale (9) de la structure de support (6), la structure de support (6) étant ensuite fabriquée sur la base de ces informations numériques au moyen d'une technique de prototypage rapide.

2. Procédé selon la revendication 1, dans lequel un procédé de frittage et de fusion par laser sélectif est appliqué comme technique de prototypage rapide, en particulier un traitement sélectif des poudres par laser.

3. Procédé selon la revendication 1 ou 2, dans lequel lesdits éléments de rétention (12) sont prévus sur au moins 50 %, ou au moins 75 %, et de préférence sur au moins 90 % de ladite surface nominale (9) de la structure de support (6).
